# EUROPEAN PATENT APPLICATION

(11) **EP 1 245 315 A1**
(43) Date of publication of application: **02.10.2002**
(21) Application number: 02252193.4
(22) Date of filing: 27.03.2002
(51) Int. Cl.: B22F 9/06, B22F 9/08

(54) **Method of manufacturing fine metal particles, substance containing fine metal particles and paste solder composition**

(30) Priority: 28.03.2001 JP 2001092273; 21.09.2001 JP 2001288778; 27.12.2001 JP 2001395566
(71) Applicant: Tamura Kaken Corporation, Iruma-shi, Saitama 358-8501 (JP)
(72) Inventor: Ono, Takao, Iruma-shi, Saitama 358-8501 (JP); Takahashi, Yoshiyuki, Iruma-shi, Saitama 358-8501 (JP); Iwabuchi, Mitsuru, Iruma-shi, Saitama 358-8501 (JP); Ohashi, Yuji, Iruma-shi, Saitama 358-8501 (JP)
(74) Representative: Lawrence, John

(57) **Abstract**

There is provided an in-oil atomization method wherein a solder is fused and dispersed in a heated particle dispersion medium, the method being featured in that even if the quantity of the particle dispersion medium to be employed is relatively small, fine solder particles can be effectively obtained. Namely, this invention provides a method of manufacturing fine particles, wherein solder is fused in the heated particle dispersion medium to obtain a molten solder, which is then dispersed by means of an agitator to obtain molten solder particles which are subsequently cooled and solidify, the method being characterized in that the above dispersing step is performed in the presence of a particle coalescence-preventing agent. This invention also provides a fine metal particles-containing substance and a paste solder composition.

To be accompanied, when published, by Figure 3 of the drawings.

## Description

### BACKGROUND OF THE INVENTION

The present invention relates to a method of manufacturing fine metal particles such as solder particles, to a fine metal particles-containing substance containing such fine metal particles, and to a paste solder composition comprising such a fine metal particles-containing substance.

In recent years, concomitant with an increasing trend to multi-functionalize the wiring board of electronic devices as well as with an increasing trend of miniaturization, i.e. the reduction of the size and weight of electronic devices, a surface mounting technique has now been quickly advanced, so that it is now desired, for the purpose of realizing a high density packaging such as the surface mounting of electronic device, to develop a solder paste or other kinds of soldering materials and a soldering method, which are not only capable of performing a metal mask printing of a fine pattern, but also excellent in solderability.

As for the solder paste, the configuration of soldering particles should preferably be spherical rather than aspherical so as to make it possible to perform the metal mask printing of a fine pattern. It is also desired that the solder is made into as fine particle as possible in order to meet the current demands that the solder is also applicable to a refined wiring so as to make it possible to directly solder an LSI chip onto the surface of wiring board.

As for the method of making soldering particles into spherical particles, there is generally employed an atomizing method wherein a fused solder in a solder melt bath is sprayed into an atmosphere, thereby pulverizing the fused solder in the atmosphere.

This atomization method can be classified, according to differences in spraying method thereof, into two kinds of methods, i.e. a centrifugal atomization method wherein the centrifugal force of rotary disc is utilized, and a gas atomization method wherein a gas is ejected into a solder melt bath so as to disperse and atomize the fused solder. There is also known an ultrasonic atomization method wherein an ultrasonic vibration is applied to the fused solder for achieving the atomization of the solder.

The centrifugal atomization method is an atomization method wherein a fused solder is poured onto the surface of a rotary disk while keeping the rotary disk rotated, thereby enabling a thin film to be formed on the surface of the rotary disk due to the centrifugal force, the resultant film being allowed to disperse from the peripheral portion of the disk, thus forming fine drops of solder, which is then allowed to cool and solidify in the ambient atmosphere to achieve the atomization of solder. It is possible, according to this method, to minimize the average particle diameter of the resultant solder particles by increasing the rotational speed of the disk. However, since there is a limit in the rotational speed of the motor employed for driving the rotary disk, it is difficult, in industrial viewpoint, to control the average particle diameter of the resultant solder particles to not less than 10ìm and to reliably make the solder particles into a spherical configuration.

According to the gas atomization method, since the fused solder is forced to disperse and atomize by the ejection of gas, it will invite various problems, i.e. the distribution in particle size of the resultant solder particles becomes relatively wide, and so-called satellite particles where small particles are permitted to adhere onto the surface of a relatively large solder particle is caused to greatly generate, thereby not only deteriorating the pulverization efficiency but also making it difficult to obtain spherical particles. Further, although it is possible according to this method to minimize the average particle diameter of the resultant solder particles by enhancing the ejection pressure of gas, the problem of the generation of satellite particles would become more prominent, thus raising a serious problem and hence making it increasingly difficult to obtain spherical fine particles.

According to the ultrasonic atomization method on the other hand, as the frequency of the ultrasonic vibrator becomes higher, the average particle diameter of solder particles to be obtained can be minimized. However, in order to increase the frequency of the ultrasonic vibrator, the size of the ultrasonic vibrator is required to be reduced, which however, invites the deterioration of the efficiency of granulation. As a result, it is very difficult to industrially manufacture solder particles having an average particle diameter of not more than 10 micrometers.

As an alternative method to the aforementioned ejection methods, there is proposed an in-oil atomization method wherein lumps of solder are heated in a dispersion medium having a high boiling point at a temperature higher than the melting point of the solder to thereby melt the lumps of solder, the resultant molten solder being subsequently agitated to disperse and transform the molten solder into liquid granules , which are then cooled and solidified to thereby obtain fine granular solder.

According to this in-oil atomization method, since a solder is permitted to melt in a heated oily liquid dispersion medium to obtain the molten solder which is then agitated to form liquid fine particles, the liquid fine particles being subsequently permitted to cool and solidify, it is possible to obtain fine solder particles which are substantially spherical in configuration and are free from the generation of aforementioned satellite particles or deformed particles. Additionally, this in-oil atomization method is also advantageous in that it is possible to relatively easily obtain fine solder particles having an average particle diameter of not more than 10 micrometers by increasing the rotational speed of the agitation. Furthermore, since this in-oil atomization method is a so-called wet system where the granulation of solder is performed in an oily liquid dispersion medium, this in-oil atomization method is substantially free from the problems to be raised as the diameter of solder particles is increasingly minimized, such as the adhesion of solder particles onto an atomizing apparatus, the oxidation of solder particles, the deterioration in fluidity of the resultant solder particles, the generation of dusts, etc., which problems are inherently accompanied with the conventional so-called dry system such as the aforementioned centrifugal atomizing method where the granulation of solder is performed in a gas atmosphere. Therefore, this in-oil atomization method is advantageous also in treating fine solder particles in the manufacturing processes thereof.

As explained above, although all of the aforementioned centrifugal atomization method, gas atomization method and ultrasonic atomization method are applicable to the manufacture of solder particles having an average particle diameter of not less than 10 µm, these methods are not satisfactory in manufacturing the solder particles having an average particle diameter of not larger than 10µm and also may not be satisfactory in manufacturing the solder particles having a spherical configuration. Whereas, the in-oil atomization method is advantageous in that it is capable of solving the aforementioned problems.

However, this in-oil atomization method is accompanied with the problem that when the concentration of the dispersed solder particles (the volume ratio of the liquid particles of molten solder to the dispersing medium) is increased, the liquid particles of molten solder that have been once segmented and divided into smaller particles by an agitator are permitted to immediately return to the original size of liquid particles, or permitted to generate the so-called coalescence of solder particles, thereby preventing the molten solder particles from further being granulated. There is also a problem that even if the granulation of the solder particles is proceeded, when the liquid particles are permitted to contact with each other due to the sedimentation thereof, the coalescence of liquid solder particles is caused to take place, thereby resulting in an increased bulkiness of the solder particles. In particular, the above problem would become more prominent in the situations where a vegetable oil having a high acid number is employed as a dispersion medium for the purpose of obtaining solder particles exhibiting a modest surface oxidation, or where an oily substance exhibiting a relatively low viscosity is employed.

In order to avoid these problems, it has been conventionally considered that the concentration of the dispersed solder particles should be made as low as possible, and that the liquid particles of molten solder that have been granulated by the agitation of the molten solder should be prevented from being contacted with each other. If these countermeasures are to be realized, a large quantity of dispersing medium is required to be employed, and hence the dispersing medium thus employed is required to be subsequently removed in order to ultimately obtain solder particles. Accordingly, if it is required to discard a large quantity of dispersing medium, the consumption of the dispersing medium would be inevitably increased, thus raising a problem that the manufacturing cost of the solder particles would be caused to increase.

### BRIEF SUMMARY OF THE INVENTION

Therefore, a first object of this invention is to provide a method of manufacturing fine metal particles, which makes it possible to effectively manufacture fine metal particles in industrial viewpoint, to provide a substance containing such fine metal particles, and to provide a paste solder composition containing such fine metal particles.

A second object of this invention is to provide a method of manufacturing fine metal particles, which makes it possible to effectively manufacture spherical fine metal particles in industrial viewpoint, to provide a substance containing such spherical fine metal particles, and to provide a paste solder composition containing such spherical fine metal particles.

A third object of this invention is to provide a method of manufacturing fine metal particles, which makes it possible to minimize a component to be consumed in the manufacturing process thereof, to provide a substance containing such fine metal particles, and to provide a paste solder composition containing such fine metal particles.

A fourth object of this invention is to provide a method of manufacturing fine metal particles, which makes it possible to reduce the manufacturing cost thereof, to provide a substance containing such fine metal particles, and to provide a paste solder composition containing such fine metal particles.

A fifth object of this invention is to provide a method of manufacturing fine metal particles, which makes it possible to apply them even to a fine soldering portion on the surface of wiring board, to provide a substance containing such fine metal particles, and to provide a paste solder composition containing such fine metal particles.

As a result of intensive studies made by the present inventors with a view to solve the aforementioned objects, it has been found that when rosin having carboxyl group is incorporated in a dispersion medium in the in-oil atomization method, the rosin is permitted to be adsorbed on the surfaces of the fine particles of fused solder through a chemical reaction to form a rosin film, thereby making it possible to greatly inhibit the coalescence among the fine particles, this effect of inhibiting the coalescence being further promoted especially when a modified rosin is incorporated in a dispersion medium, thus accomplishing the present invention.

Namely, the present invention provides (1) a method of manufacturing fine metal particles, which comprises the steps of:
dispersing molten metal particles in a dispersion medium by way of a process wherein a low melting point metal is mixed with the dispersion medium to obtain a mixture which is subsequently heated to melt the low melting point metal, and a dispersing energy is applied to the dispersion medium to disperse the low melting point metal in the dispersion medium to obtain a molten metal particle-dispersed substance; and
forming solid particles by cooling the molten metal particle-dispersed substance to thereby solidify the molten metal particles;
wherein said step of dispersing molten metal particles in a dispersion medium and said step of forming solid particles are preceded by a step of mixing the dispersion medium with a particle coalescence-preventing agent which is capable of adsorbing onto and/or reacting with at least the molten metal particles and also capable of preventing the generation of coalescence at least among the molten metal particles.

The present invention also provides (2) the method of manufacturing fine metal particles according to the aforementioned item (1), wherein said particle coalescence-preventing agent is rosin and/or a derivative thereof.

The present invention also provides (3) the method of manufacturing fine metal particles according to the aforementioned item (1), wherein said particle coalescence-preventing agent is rosin soap.

The present invention also provides (4) the method of manufacturing fine metal particles according to the aforementioned item (1), wherein said particle coalescence-preventing agent is a metal salt of organic acid having carboxyl group.

The present invention also provides (5) the method of manufacturing fine metal particles according to any one of the aforementioned items (1) to (4), which further comprises a step of removing the solidified metal particles obtained in said step of forming solid particles from said dispersion medium, thereby leaving a residual liquid, which is then recycled as a particle dispersion medium.

The present invention also provides (6) the method of manufacturing fine metal particles according to any one of the aforementioned items (1) to (4), wherein the low melting point metal is employed at a ratio of 0.1-100g per 100g of the dispersion medium, and the particle coalescence-preventing agent is employed at a ratio of 0.01-10g per 100g of the dispersion medium.

The present invention also provides (7) the method of manufacturing fine metal particles according to any one of the aforementioned items (1) to (4), wherein the application of said dispersing energy to the dispersion medium is performed by making use of a high-speed agitator comprising a cup-shaped stator having slits in the sidewall thereof, and a rotator mounted inside the stator and having a rotary vane, wherein a fluid material is permitted to be introduced through said slits into said stator, in which the fluid material is subjected to a high-shearing effect through an interaction between said stator and said rotator by actuating said rotator to rotate at a high speed relative to said stator, the fluid material being subsequently discharged from the stator.

The present invention also provides (8) the method of manufacturing fine metal particles according to the aforementioned item (7), wherein the number of revolution of the high-speed agitator is at least 5000 per minute, and the temperature of said heating is at least 10°C higher than the melting point of the low melting point metal.

The present invention also provides (9) the method of manufacturing fine metal particles according to any one of the aforementioned items (1) to (4), wherein the low melting point metal is employed at a ratio of 0.1-100g per 100g of the dispersion medium, the particle coalescence-preventing agent is employed at a ratio of 0.01-10g per 100g of the dispersion medium, and the application of said dispersing energy to the dispersion medium is performed by making use of a high-speed agitator comprising a cup-shaped stator having slits in the sidewall thereof, and a rotator mounted inside the stator and having a rotary vane, wherein a fluid material is permitted to be introduced through said slits into said stator, in which the fluid material is subjected to a high-shearing effect through an interaction between said stator and said rotator by actuating said rotator to rotate at a high speed relative to said stator, the fluid material being subsequently discharged from the stator.

The present invention also provides (10) the method of manufacturing fine metal particles according to any one of the aforementioned items (1) to (4), wherein the low melting point metal is employed at a ratio of 0.1-100g per 100g of the dispersion medium, the particle coalescence-preventing agent is employed at a ratio of 0.01-10g per 100g of the dispersion medium, and the application of said dispersing energy to the dispersion medium is performed by making use of a high-speed agitator comprising a cup-shaped stator having slits in the sidewall thereof, and a rotator mounted inside the stator and having a rotary vane, wherein a fluid material is permitted to be introduced through said slits into said stator, in which the fluid material is subjected to a high-shearing effect through an interaction between said stator and said rotator by actuating said rotator to rotate at a high speed relative to said stator, the fluid material being subsequently discharged from the stator, and the number of revolution of the high-speed agitator is at least 5000 per minute, and the temperature of said heating is at least 10°C higher than the melting point of the low melting point metal.

The present invention also provides (11) a fine metal particles-containing substance containing fine metal particles obtained by a method according to any one of the aforementioned items (1) to (4).

The present invention also provides (12) a paste solder composition containing fine metal particles to be employed for soldering, said fine metal particles being fine metal particles-containing substance to be obtained by a method according to any one of the aforementioned items (1) to (4).

### BRIEF DESCRIPTION OF THE SEVERAL VIEWS OF THE DRAWING

FIG. 1 is an illustration showing the front view and bottom view of the generator representing one example of the present invention;
FIG. 2 is a partial cross-sectional view of the front side of the generator shown in FIG. 1;
FIG. 3 is a cross-sectional view of an apparatus where the generator of FIG. 1 is employed; and
FIGS. 4 is a bottom view which corresponds to that shown in FIG. 1 illustrating the structure of a generator representing another example of the present invention.

### DETAILED DESCRIPTION OF THE INVENTION

In the description of this invention, the expression of "a low melting point metal" is intended to mean at least one kind material selected from low melting point pure metals and low melting point alloys, so that it may be selected only from low melting point pure metals or only from low melting point alloys, or may contain both of them.

As for the low melting point pure metals, it is possible to employ Ga (29.8°C (melting point, hereinafter the same)), In (156°C), Li (186°C), Se (217°C), Sn (232°C), Bi (271°C), Tl (302°C), Pb (327°C), Zn (419°C) and Te (452°C). It is also possible to employ Cd, Cs, Rb, K and Na.

As for the low melting point alloys, it is possible to employ 67Ag/33Te (351°C), 97.2Ag/2.8Tl (291°C), 45.6Ag/54.4Zn (258°C), 95.3Ag/4.7Bi (262°C), 52.7Bi/47.3In (110°C), 47.2In/52.8Sn (117°C), 95.3Ag/4.7Pb (304°C), 86.6Ag/3.4Li (154 °C) and 8.1Bi/91.9Zn (254.5°C).

As for the examples of the low melting point metals, solder is well known. Especially, a Pb/Sn eutectic solder is commonly employed a bonding material in electronic industries and other industrial fields. Specifically, in addition to 100% Sn (232°C), it is also possible to employ Pb-Sn type solders, such as 37Pb/63Sn (183°C), 40Pb/60Sn (183°C), 50Pb/50Sn (212°C), 44Pb/56Sn (125°C), etc.; Pb-In type solders, such as 50Pb/50In (198°C), etc.; Sn-In type solders, such as 49Sn/51In (120°C), 48Sn/52In (117-120°C), 65Sn/35In (162°C), etc.; Sn-Bi type solders, such as 43Sn/57Bi (139°C), 42Sn/58Bi (138°C), etc.; Sn-Ag type solders, such as 98Sn/2Ag (221-226°C), 96.5Sn/3.5Ag (221°C), 96Sn/4Ag (232°C), 95Sn/5Ag (232°C), etc.; Sn-Zn type solders, such as 91Sn/9Zn (199-203°C), 30Sn/70Zn, etc.; Sn-Cu type solders, such as 99.3Sn/0.7Cu (227°C), etc.; Cd-Zn type solders, such as 60Cd/30Zn, etc.; Sn-Sb type solders, such as 95Sn/5Sb (238°C), etc.; Ag-In type solders, such as 3Ag/97In (141°C), etc.; Au-Sn type solders, such as 80Au/20Sn (283°C ), etc.; Sn-Cd-Ag type solders, such as 10Sn/85Cd/5Ag, etc.; Sn-Ag-In type solders, such as 95.5Sn/3.5Ag/1In, etc.; Sn-Zn-In type solders, such as 86Sn/9Zn/5In (192°C), 81Sn/9Zn/10In (178°C), etc.; Sn-Ag-Cu type solders, such as 95.5Sn/0.5Ag/4Cu (216°C), 96.5Sn/3.0Ag/0.5Cu, etc.; Sn-Pb-Bi type solders, such as 16Sn/32Pb/52Bi (99.5°C), 19Sn/31Pb/50Bi (96°C), 34Sn/20Pb/46Bi (100°C), 43Sn/43Pb/14Bi (136-166°C), etc.; Sn-Pb-Sb type solders, such as 35Sn/64.5Pb/0.5Sb, 32Sn/66Pb/2Sb, etc.; Sn-Bi-In type solders, such as 17Sn/57Bi/26In, etc.; Pb-Ag type solders, such as 97.5Sn/2.5Ag, etc.; Sn-Bi-Ag type solders, such as 90.5Sn/7.5Bi/2Ag (207-212°C ), 41.0Sn/58Bi/1.0Ag, etc.; and Sn-Zn-Bi type solders, such as 89.0Sn/8.0Zn/3.0Bi.

As for the "particle dispersion medium" to be employed in the present invention, it is possible to employ any kinds of organic compounds as long as the usable upper limit temperature, i.e. a boiling point or a decomposition temperature thereof is higher than the melting point (melting temperature) of a low melting point metal to be employed, and they are capable of dispersing the molten particles of a low melting point metal to be employed. Specific examples of them include silicon oil; mineral oil to be produced through petroleum refining; engine oil; industrial lubricants such as spindle oil, machine oil, cylinder oil, gear oil, etc.; and synthetic lubricants to be produced by way of a chemical synthesis (the chemical components thereof are: hydrocarbons including polyolefin such as polybutene and alkyl aromatic compound such as alkylbenzene; and non-hydrocarbons including polyglycol, polyether such as phenyl ether, e.g. polyphenyl ether and alkyldiphenyl ether, diester, polyol ester, ester such as natural fats and oils (triglyceride), phosphorus compounds such as phosphate, and polyether fluoride of these compounds). It is also possible to employ, as the particle dispersion medium, a vegetable oil such as coconut oil, palm oil, olive oil, sunflower oil, castor oil, soybean oil, linseed oil, rapeseed oil, tung oil and cotton oil; whale oil; beef tallow; higher hydrocarbon compounds such as decane, dodecane, tetradecane, hexadecane, octadecane, undecane, etc.; glycols such as glycerin, ethylene glycol, diethylene glycol, triethylene glycol, polyethylene glycol, polypropylene glycol, etc. (the glycols may be called polyalkylene glycol and include not only the aforementioned triol type and diol type, but also mono-ol type (Nissan Unilube MB series (non-water soluble type); such as MB-7, MB-11, MB-22 (tradename)); derivatives of these glycols; phosphates such as trimethyl phosphate and triethyl phosphate, tributyl phosphate; substituted phenols such as octyl phenol, trichlorophenol and nonylphenol; organic heating media such trichloroaniline, diphenyls and triphenyls; phenyl imidazole; undecyl imidazole; heptadecyl imidazole. It is preferable, in view of avoiding fire, to select those which are free from inflammability.

Preferably, this "particle dispersion medium" should be employed under the conditions wherein the heating temperature is not higher than the usable upper limit temperature thereof but higher than the melting temperature of the low melting point metal to be employed, and the heating is performed in an inert gas atmosphere. For example, the usable temperature thereof may be selected from the range of 120 to 470°C. The usable temperature of the particle dispersion medium however is usually not higher than the decomposition temperature of the aforementioned organic materials.

It is preferable to incorporate an anti-oxidant into the particle dispersion medium in order to prevent the oxidation of the particle dispersion medium on the occasion of heating it, thereby making it possible to prevent the oxidation of the particle dispersion medium by the oxygen that may be included in a very small quantity even in an inert gas atmosphere.

As for the anti-oxidant, those which are commonly employed in fats and oils, rubber or synthetic resins can be employed. For example, a phenol-based anti-oxidant, a bis-phenol-based anti-oxidant, a polymer-based anti-oxidant, a sulfur-based anti-oxidant, a phosphorus-based anti-oxidant, etc. can be employed. Otherwise, imidazols having an oxidation-suppressing effect may be used singly or together with the aforementioned anti-oxidants. Specific examples of these anti-oxidants useful in the present invention are set forth in Japanese Patent Unexamined Publication (Kokai) H9-49007.

Although the "particle coalescence-preventing agent" to be employed in the present invention is designed to prevent the coalescence among the molten metal particles that may be caused to occur due to the fusion of the molten metal particles with each other, the particle coalescence-preventing agent may be also designed to prevent the coalescence among the solidified metal particles to be obtained from the solidification of the molten metal particles, or to prevent the coalescence between the molten metal particles and the solidified metal particles to be obtained from the solidification of the molten metal particles.

In the case of a dispersed material where a dispersing material (material to be dispersed) (particles) is dispersed in a dispersing medium such as emulsion, the process where the dispersed material is getting gradually instabilized is considered to proceed generally according to the following stages. At first, a phenomenon of creaming (a phenomenon where particles are floated upward or settled downward due to a difference in specific gravity between the particles and the dispersing medium) is caused to occur, which is followed by a phenomenon of aggregation (a phenomenon where particles approaching to each other are caused to bond to each other due to the attractive force thereof), resulting finally in the coalescence thereof (a phenomenon where the particles are integrated with each other). When an activating agent or a polymer is adsorbed onto the surfaces of particles, particles are caused to contact with each other through this adsorbed film at the stage of the aggregation. Therefore, it is important to form a very strong adsorptive layer on the surfaces of particles for the purpose of preventing the aforementioned coalescence, thereby making it possible to prevent the adsorbed layer from being peeled off or pushed aside due to a shearing stress to the surfaces of the particles, thus preventing the particles from being directly contacted with each other and hence from generating the coalescence of particles. For this purpose, it is important that a material having a strong affinity not only to the particle but also to the dispersing medium is employed for the adsorbed layer, and that the resultant adsorbed layer is excellent in surface viscosity as well as in surface elasticity ("Chemistry on Interfacial Phenomena", Sankyo Publishing Co. Ltd., pp16-18).

In this viewpoint, a compound which is capable of adsorbing onto and/or reacting with the surface of a metal particle, especially, a molten metal particle is employed as a "particle coalescence-preventing agent". More specifically, the following materials can be employed.
(i) Rosin and/or the derivatives thereof (Rosins)
   (a) Examples of rosin: Tall oil rosin, gum rosin, wood rosin, etc.
   (b) Examples of rosin derivatives: Hydrogenated rosin, polymerized rosin, heterogeneous rosin, acrylic acid-modified rosin, maleic acid-modified rosin, rosin alcohol, rosin amine, rosin soap, etc.
      All of the tall oil rosin, gum rosin, wood rosin comprises, as a main component, abietic acids (abietic acid, dehydroabietic acid, neoabietic acid) and, as a constituent component, pimaric acid, parastearic acid, isopimaric acid or other resin acids, the component ratios thereof being different from each other among these rosins.
      Rosin soap is a metal salt of rosin or a metal salt of rosin derivative having carboxyl group, wherein the metal thereof is selected from the group consisting of Na, K, Li, Ca, Mg, Al, Zn, Sn, Pb, Ni, Cu, Co, Mn, Fe, In, Bi and Ag. Among them, Sn salt is most preferable among them for using it as a solder material. On the other hand, in terms of the effect to prevent the coalescence of particles as a "particle coalescence-preventing agent", it is preferable for the rosin or rosin derivatives having carboxyl group to have as many carboxyl groups as possible. Among these metal salts, it is preferable to employ a metal salt of monobasic acid-modified rosin, more preferably, a metal salt of dibasic acid-modified rosin.
   (c) It is possible to employ a colorless rosin derivative that can be employed through a hydrogenation reaction of an addition reaction product to be obtained from the reaction between a refined rosin and á,â-unsaturated monocarboxylic acid and/or á,â-unsaturated dicarboxylic acid (Japanese Patent Unexamined Publication (Kokai) H5-86334).
      Although at least one kind of material selected from the aforementioned groups (a) to (c) is employed, it is more preferable to select from those excellent in affinity (adsorptivity and/or reactivity) to the surface of metal particle, in particular, molten metal particle. Among them, it is especially preferable to employ monobasic acid (acrylic acid, methacrylic acid, crotonic acid, etc.)-modified rosin, glycolic acid-modified rosin, dibasic acid (maleic acid, maleic anhydride, fumaric acid, etc.)-modified rosin or metal salts thereof.
(ii) Triazoles
   Benzotriazole and/or derivatives thereof
(iii) Imidazole and/or derivatives thereof
(iv) Amine compounds
   Aromatic amine (aniline, o-toluidine, m-toluidine, p-toluidine), aliphatic amine and cyclic ketoamine, etc.
(v) Organic acids having carboxyl group such as fatty acids and/or metal salts thereof
   A fatty acid having at least 8 (8 or more) carbon atoms such as dicarboxylic acid, polycarboxyl acid, hydroxycarboxylic acid (for example, 12-hydroxy stearic acid, licinolic acid), aromatic carboxylic acid, aminocarboxylic acid, a higher fatty acid (oleic acid, stearic acid, etc.), etc.; acrylic acid; polyacrylic acid; and metal salts thereof.
   In this case, the metal salts of each of these organic acids are generally called a metal soap, wherein the metal thereof is selected from the group consisting of Na, K, Li, Ca, Mg, Al, Zn, Sn, Pb, Ni, Cu, Co, Mn, Fe, In, Bi and Ag. Among them, Sn salt is most preferable among them for using it as a solder material. On the other hand, in terms of the effect to prevent the coalescence of particles as a "particle coalescence-preventing agent", the metal salts of organic acid having carboxyl group (carboxylic acid) should preferably be selected from metal salts of linear fatty acids or of hydroxy fatty acids each having at least 8 (8 or more) carbon atoms. It is especially preferable to employ metal salts of stearic acid, metal salts of 12-hydroxy stearic acid and metal salts of licinolic acid. By the way, the metal salts of the derivatives of fatty acid or of 12-hydroxy stearic acid can be deemed to fall within the definition of the fatty acid soap.
(vi) Hydrazines
   Hydrated hydrazine and alkyl hydrazine compound (benzyl hydrazine, tert-butyl hydrazine hydrochloride, isopropyl hydrazine sulfate and hydrazinomethyl acetate hydrochloride).
(vii) Pyrazoles
(viii) Azo compounds
(ix) Thermoplastic resin such as acrylic resin and phenol resin.
(x) Alcohols such as propyl alcohol, butyne diol, hexynol and ethylacrosinol.
(xi) Isocyanates
(xii) Sulfur-containing compounds
   Heterocyclic compounds having a thiourea-based compound such as thiourea and N-substituted alkyl thiourea, and -SH group (mercapto group) in the molecule thereof (2-mercaptobenzothiazole, 2-mercaptobenzoimdazole, etc.).
(xiii) High-molecular amine compounds
   Poly(4-vinyl pyridine), etc.

The compounds set forth in these items (i) through (xiii) may be employed singly or in combination thereof, which are selected from the same item or different items.

As for the effects of the carboxyl group (-COOH) on the metals, it can be classified into a case where a chemical adsorption is taken place on the surface of a metal as represented by -COO-Me (metal)-OOC-, and a case where a physical adsorption due to the attractive force of electric charge is taken place on the surface of a metal as in the case of -OH as represented by -O⁻-H⁺/Me⁻⁺/-O⁻-H⁺. Since the former case is accompanied with a chemical reaction, a large quantity of adsorption heat is generated, so that it requires a high activating energy which is higher than that of the physical adsorption, indicating that the adsorption force in the chemical adsorption is relatively strong, thus preventing the particle coalescence-preventing agent from being easily desorbed at a high temperature.

As for the mixing ratio of these components in the particle dispersion medium, the content of the low melting point metal should be within the range of 0.1 to 100g, preferably 1 to 50g, more preferably 2 to 20g per 100g of the particle dispersion medium, and the content of the particle coalescence-preventing agent should preferably be within the range of 0.01 to 10g per 100g of the particle dispersion medium. When the mixing ratio of the low melting point metal is smaller than the aforementioned lower limit, the manufacturing efficiency of the fine metal particles would be deteriorated. Whereas when the mixing ratio of the low melting point metal is larger than the aforementioned upper limit, the effects of preventing the coalescence of the molten metal particles that have been once dispersed in the particle dispersion medium would be deteriorated in the same manner as in the case where the content of the particle coalescence-preventing agent is lower than the aforementioned lower limit thereof. On the other hand, when the content of the particle coalescence-preventing agent is larger than the aforementioned upper limit thereof, the coalescence-preventing effects thereof would be no longer enhanced, indicating the saturation of the coalescence-preventing effects.

The processing liquid (liquid to be processed) that has been obtained through the mixing of these constituent components is then subjected to a dispersion treatment. In this case, the expression of "a dispersing energy is applied to the dispersion medium to disperse the low melting point metal, as particles, in the dispersion medium" is intended to indicate a process wherein a lump or a coarse particle is atomized to obtain fine particles, to which a mechanical energy is applied for preventing the fine particles from being aggregated or coalesced. Therefore, this dispersion treatment includes not only a situation where a molten body of the low melting point metal is split and dispersed as fine particles in the particle dispersion medium, but also a situation where a lump or powder of the low melting point metal is dispersed as fine particles in the particle dispersion medium. Alternatively, both of these situations may be intermingled with other. In the latter situation where a lump or powder of the low melting point metal is dispersed as fine particles in the particle dispersion medium, the fine particles are heated during or subsequent to the dispersion process so as to melt and disperse the fine particles, thereby obtaining a dispersion of molten metal particles. It is preferable to perform this dispersion treatment in such a way that a lump or powder of the low melting point metal is mixed with a particle dispersion medium, the resultant mixture being subsequently heated and dispersed, or in such a way that a lump or powder of the low melting point metal is mixed with a heated particle dispersion medium, the resultant mixture being subsequently dispersed. However, the present invention is not limited to these dispersion treatments.

As for the means for applying a dispersing energy to the dispersion medium, it is possible to employ an agitation/dispersion apparatus comprising a generator consisting of a rotator and a stator, an ultrasonic dispersion apparatus, a high-pressure homogenizer or high-speed agitators which are disclosed in Japanese Patent Unexamined Publications (Kokai) H9-75698; H10-161667; and H11-347388.

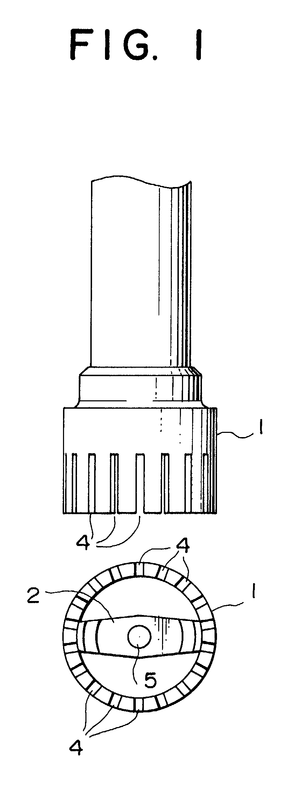

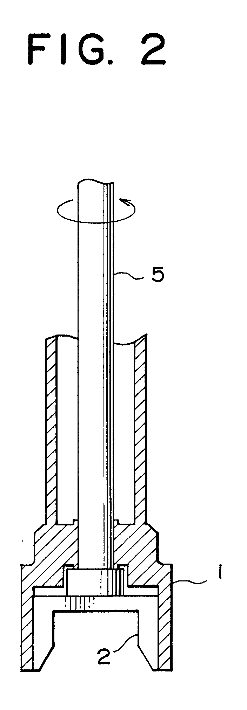

As for the agitation/dispersion apparatus comprising a generator consisting of a rotator and a stator, it is possible to employ the apparatus shown in FIGS. 1 and 2. Referring to FIGS. 1 and 2, the apparatus comprises a concave stator (a cup-shaped body) 1 having a plurality of slits 4 in the sidewall thereof, the slits 4 being radially provided along the sidewall. A rotator 2 (having a couple of vanes on both sides of the axis thereof) is mounted inside the stator 1 so as to be rotated at a high-speed relative to the stator 1, thereby enabling the processing liquid (or a mixed solution where the particle coalescence-preventing agent and the low melting point metal are fused in the particle dispersion medium) to be sucked into the stator 1. The processing liquid thus sucked into the stator 1 is then subjected to a high-shearing effect acting between the stator 1 and the rotator 2 to thereby split and granulate the molten body of the low melting point mental in the processing liquid, the dispersion liquid medium for the molten metal particles being subsequently discharged from the slits 4. The reference numeral 5 denotes a rotation axis.

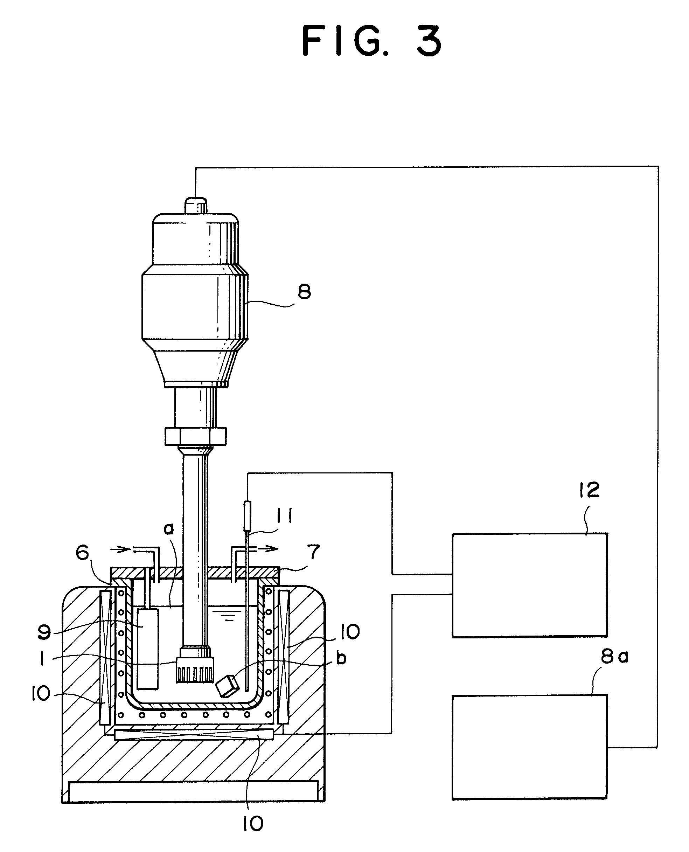

The high-shearing apparatus shown in FIG. 1 is disposed in the inner bottom portion of a processing tank 6 in such a manner that the high-shearing apparatus is spaced apart from the bottom surface of the processing tank 6. The rotation axis 5 (not shown in FIG. 3) of the high-shearing apparatus is inserted into a cylindrical body which is hermetically pierced through a top board 7, thereby enabling the torque from a motor 8 (the rotational speed thereof is enabled to be controlled by a rotational speed controller 8a) to be transmitted to the rotation axis 5. The top board 7 which is hermetically and detachably mounted on the high-shearing apparatus is provided with an inlet port and with an outlet port (as shown by an arrow) so as to enable an inert gas to always pass through the interior of the processing tank 6, whereby the interior of the processing tank 6 can be kept in an inert gas atmosphere. When the bottom portion and opposite sidewalls of the processing tank 6 are heated by heaters 10 disposed around thereof, a mixed liquid filled so as to immerse the high-shearing apparatus therein and composed of a solution "a" comprising the particle dispersion medium and the particle coalescence-preventing agent, and also containing a low melting point metal "b" is heated up to a suitable processing temperature to fuse the low melting point metal "b" with the rotator 2 being rotated at a low speed if required, which is followed by a high-speed rotation of the rotator 2 to thereby obtain the aforementioned processing liquid.

On this occasion, the temperature of the processing liquid is detected by means of a thermocouple 11 so as to enable a temperature controller 12 to control the heat quantity of the heaters 10, thereby making it possible to suitably control the temperature of the processing liquid. Between the processing tank 6 and the heaters 10, there is disposed a copper pipe so as to surround the processing tank 6. This copper pipe is mounted so as to enable a cooling water to flow therein, thereby preventing the temperature of the processing liquid from rising higher than a predetermined value during the stirring thereof, and also allowing the processing liquid to cool down to the ordinary temperature after finishing the stirring thereof. By the way, a baffle plate 9 is disposed so as to prevent a gas from being entrapped in the processing liquid as a central portion of the liquid surface is depressed due to the generation of a revolving flow of the processing liquid. The reference numeral 13 denotes a processing tank-receiving body which is lined with a heat resistant material having the aforementioned heaters buried therein.

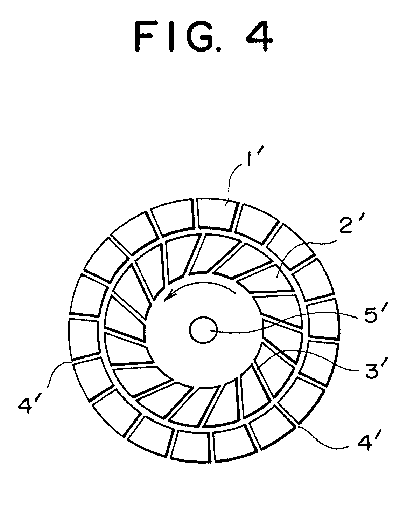

Although it is preferable to employ the apparatus shown in FIGS. 1 and 2, it is also possible to employ the Kady mill set forth in Japanese Patent No. 2555715. This Kady mill is constructed as shown in FIG. 4 which illustrates a plan view of the structure of the generator thereof. Namely, this Kady mill comprises a stator 1' having a plurality of slits 4' radially disposed, and a rotator 2' having a plurality of slits 3' which are radially disposed, the edges of these slits 3' being inclined in a direction opposite to the rotational direction thereof. When the rotator 2' is rotated at a high speed relative to the stator 1, the processing liquid is sucked into the stator 1. The processing liquid thus sucked into the stator 1 is then subjected to a high-shearing effect acting between the stator 1' and the rotator 2' to thereby split and granulate the molten body of the low melting point mental in the processing liquid, the dispersion liquid medium for the molten metal particles being subsequently discharged from the slits 4'. The reference numeral 5' denotes a rotation axis. The Kady mill may be of any kind as long as the generator is constructed as described above.

Further, the ultrasonic dispersion apparatus is designed to apply an ultrasonic energy to the processing liquid while the processing liquid is kept agitated by means of a homogenizer or other kinds of agitators. Thus, it is possible, even in this case, to treat the processing liquid under a heated condition, thereby enabling a molten body of the low melting point metal to be split and granulated. As for the means to generate an ultrasonic vibration, it is possible to employ a separation type vibrator where an oscillator and a vibrator are separated, an integrated type vibrator where these component members are integrated with each other, an immersion type vibrator, or a planar type vibrator. It is also possible to a joint type vibrator where a plurality of ultrasonic vibrations differing in frequency are jointly used.

Further, the high-pressure homogenizer is designed such that a processing liquid is enabled to pass through a narrow gap under a pressure, and then, the processing liquid thus pressurized is instantaneously lowered to a lower pressure, thereby generating cavitation, whose effect is then utilized so as to granulate the low melting point metal.

It is possible, through the application of a high energy to the processing liquid for the dispersion thereof, e.g. through an increase of rotational speed or of the number of vibration in each of the aforementioned dispersion apparatus, to control the average particle diameter of the molten metal particles to a preferable range of not more than ten and several micrometers, more preferably, not more than ten micrometers.

The processing liquid where the molten metal particles are dispersed in the particle dispersion medium containing a particle coalescence-preventing agent as described above is then cooled down to a temperature which is not higher than the solidification point of the molten metal to thereby enable the molten metal particles to be solidified to form solid metal particles. As for the cooling method to be employed in this case, although the molten metal particles may be water-cooled as shown in FIG. 3, or air-cooled in a vessel of the dispersion apparatus, the processing liquid may be pooled and then, quenched by pouring a cooling medium into the pooled processing liquid. Alternatively, the processing liquid may be continuously poured into a cooling medium. This cooling medium may be the aforementioned particle dispersion medium, or other kinds of cooling medium, for instance, a volatile cooling medium.

Thereafter, the solid metal particles are isolated from the particle dispersion medium by means of gravitational sedimentation, centrifugal sedimentation or filtration. Then, in order to discard matters other than the solid metal particles, a slurry obtained in this manner is washed with a solvent and dried to obtain a metallic powder. However, if it is desired to obtain a solder powder, a rosin-based material employed as a particle coalescence-preventing agent is not required to be completely removed from the slurry.

The configuration and particle diameter of the solid metal particles to be obtained in this manner would be determined depending on the configuration and particle diameter of the molten metal particles that have been dispersed in the heated particle dispersion medium. In this case, since the molten metal particles formed are almost perfectly spherical, the solid metal particles would become also almost perfectly spherical. On the other hand, if it is desired to obtain fine solid particles, the molten metal particles should be formed into fine particles. In order to realize this, the rotational speed or the number of vibration in each of the aforementioned dispersion apparatus should be increased as mentioned above, and at the same time, the operation conditions of these dispersion apparatus such as the time for applying a dispersion energy, the heating temperature of the processing liquid, and the processing time, as well as the kinds and mixing ratios of components to be employed such as the low melting point metal, the particle dispersion medium and the particle coalescence-preventing agent should be suitably selected, thereby making it possible to obtain molten fine metal particles having an average particle diameter ranging from 2 to 30µm.

In the present invention, the definition of the "fine metal particles-containing substance" includes a composition comprising the fine metal particles (powder) obtained in this manner and the aforementioned particle coalescence-preventing agent adhered to the fine metal particles.

The fine metal particles (powder) obtained by the aforementioned manufacturing method can be employed at a ratio of 85-92% by weight (flux: 8-15% by weight) based on a solder paste. Since the fine metal particles are spherical in shape, it is suited for use in a reflow solder to be employed in the manufacture of the current printed circuit board wherein the pitch of solder lands is increasingly narrowed.

As for the flux to be employed in this case, rosin-based resin can be employed. As for the examples of the rosin-based resin, it is possible to employ derivatives of rosin and of modified rosin. These derivatives may be co-used. More specifically, it is possible to employ gum rosin, wood rosin, polymerized rosin, phenol-modified rosin, and the derivatives thereof. The content of the rosin-based resin may be in the range of 30 to 70% by weight based on so-called flux or all of the solder paste components excluding the solder powder. If the content of the rosin-based resin is less than this lower limit, so-called solderability of the solder paste (i.e. the ability of the solder paste to prevent the oxidation of copper surface of soldering land to thereby improving the wettability thereof to the fused solder) would be deteriorated, thus giving rise to the generation of solder balls. On the other hand, if the content of the rosin-based resin is larger than this upper limit, the quantity of residue would be increased.

As for the activating agent to be incorporated in the flux, it is possible to employ hydrohalogenates of organic amine and organic acid. More specifically, it is possible to employ diphenyl guanidine hydrobromate, cyclohexyl amine hydrobromate, diethyl amine hydrobromate, triethanol amine hydrobromate, monoethanol amine hydrobromate, adipic acid, sebacic acid, etc. The content of these activating agent should preferably be in the range of 0.1 to 3% by weight based on the flux in terms of inhibiting the generation of corrosion by the effects of the residue thereof, and of preventing the generation of damage to the insulation resistance, and in terms of solderability and of preventing the generation of solder balls.

A thixotropic agent may be employed for adjusting the viscosity of a solder paste so as to optimize the printing characteristics of the solder paste. For instance, hydrogenated castor oil, fatty acid amides and oxyfatty acids may be employed for this purpose, the mixing ratio of which being preferably in the range of 3 to 15% by weight based on the flux.

As for the solvent, those which are commonly employed for the solder paste can be employed. For instance, hexylcarbitol (boiling point: 260°C), butylcarbitol (boiling point: 230°C), etc. can be employed, the mixing ratio of which being preferably in the range of 30 to 50% by weight based on the flux.

This invention will be further explained with reference to the following examples which are not intended to limit this invention. The "%" in these examples is expressed on the basis of weight.

In the following examples, there is exemplified a method of manufacturing fine metal particles, wherein a low melting point metal is melted and dispersed in a heated particle dispersion medium (dispersion medium) while applying a dispersion energy to obtain fine metal particles which are subsequently cooled to solidify the fine metal particles, the resultant solid fine metal particles being subsequently separated to obtain fine; wherein said step of dispersing molten metal particles in a dispersion medium and said step of forming solid particles are preceded by a step of mixing the dispersion medium with a particle coalescence-preventing agent which is capable of adsorbing onto and/or reacting with at least the molten metal particles and also capable of preventing the generation of coalescence at least among the molten metal particles, thereby making it possible to obtain solid fine metal particles.

Further, it is possible to manufacture solder fine particles or solder fine powder by making use of a high-speed agitator (rotation speed: 5000rpm or more, for example 5000rpm-20000rpm) comprising a stator and a rotator as shown in FIG. 1, by suitably selecting the kinds of the solder, the kinds of rosin and/or the derivatives thereof, the kinds of fatty acid soap (including metal salts of hydroxycarboxylic acid of the derivatives of fatty acid), and by using polyalkylene glycol or vegetable oil as a particle dispersion medium. In this case, the mixing ratio between the solder powder and the dispersion medium should preferably be 1:100 to 1:2 (weight ratio, the same hereinafter), and the mixing ratio between the rosin and/or the derivatives thereof, or the fatty acid soap and the dispersion medium should preferably be 1:2000 to 1:20. As for the heating temperature, it should preferably be "the melting point of the solder + 10°C or so". As for the residue to be left behind after the removal of the solidified fine particles of low melting point metal from the dispersion medium, it can be recycled as a particle dispersion medium after, preferably, removing floating matters from the dispersion medium.

The fine particles or powder thus obtained is substantially perfectly spherical in configuration (average particle diameter: 15µm or less, for instance 8-13µm). A solder paste can be manufactured by making use of the fine particles, and the solder paste thus obtained can be applied to a fine soldering portion of wiring board.

### Example 1

A mixture consisting of 90g of Sn-Pb eutectic alloy lump (63Sn/37Pb) (solder alloy), 882g of Unilube MB-22 (polyalkylene glycol; Nippon Yushi Co., Ltd.) (dispersion medium), and 18g of hydrogenated acrylic acid-modified rosin (KE-604, Arakawa Chemical Industries Ltd.) (a particle coalescence-preventing agent) (the mixing ratio of the particle coalescence-preventing agent is 2% based on the total weight of the dispersion medium plus the particle coalescence-preventing agent) was placed in a 1000mL separable flask, which was then set in an agitator (HG-92 type, SMT Co., Ltd.) and the agitator was hermetically closed. Thereafter, nitrogen gas was introduced into this separable flask to thereby turn the interior of the flask into an inert gas atmosphere.

Under this condition, the separable flask was heated up to 190°C by means of a mantle heater. On this occasion, in order to dissolve the KE-604 in the Unilube MB-22 at the initial stage of this heating, the agitator was rotated at a low speed. At the moment when the KE-604 was dissolved and the temperature of the mixture was stabilized at a temperature of 190°C, the agitator was rotated at a high speed of 10,000rpm for 10 minutes.

Then, the agitation and the heating were suspended, and a cooling water was allowed to flow through a water-cooling pipe which was interposed between the separable flask and the mantle heater to thereby cool the mixture in the flask. This cooling step was continued for 20 minutes, after which the separable flask was opened, and a supernatant liquid was removed and the precipitated matter settled on the bottom of the flask was taken out. Then, this precipitated matter was immersed in ethyl acetate, and dissolved phase was removed together with the ethyl acetate. This decantation operation was repeated, and then, the ethyl acetate was removed by means of vacuum drying to obtain fine solder particles. By the way, it is also possible to employ the aforementioned precipitated matter as it is as a paste solder material.

When the fine solder particles obtained in this manner was observed by means of a scanning electronic microscope (SEM), the fine solder particles are found perfectly spherical and completely free from the generation of satellite particles. Further, when the average particle diameter thereof and the distribution of particle size thereof were measured by means of a laser diffraction method, the average particle diameter thereof was found 12.4ìm, and the distribution of particle size thereof was found 0.61 as the particle size distribution was represented by ε = (D₉₀-D₁₀)/D₅₀ (D₉₀, D₁₀, D₅₀ represent respectively the diameter of particle when the quantity of the particles is counted at 90%, 10% and 50%, respectively, as the entire particles are arranged in order of diameter from smaller one to larger one). Further, the yield of the fine solder particles obtained was 90%. The smaller the value of å is, the narrower, i.e. the more sharp is the distribution of particle size.

By the way, the following Table 1 shows the measured results together with the kinds of particle dispersion medium (dispersion medium (base oil)), the kinds of the hydrogenated acrylic acid-modified rosin (additive rosin), the quantity of the rosin added, the rotational speed of the agitator (rotational speed for agitation), and the temperature of the mixture comprising a solder alloy, a dispersion medium and a particle coalescence-preventing agent (stirring temperature).

### Examples 2 to 11

Fine solder particles were manufactured in the same manner as in Example 1 except that the kinds of dispersion medium, the quantity of the rosin, the rotational speed for agitation, and the stirring temperature were altered as shown in Table 1. Table 1 shows the results which were measured in the same manner as in Example 1.

### Examples 12 to 16

Fine solder particles were manufactured in the same manner as in Example 1 except that the composition of alloy, the kinds of dispersion medium, the kinds of the rosin, and the stirring temperature were altered as shown in Table 1. Table 1 shows the results which were measured in the same manner as in Example 1. Comparative Examples 1 and 2

Fine solder particles were manufactured in the same manner as in Example 1 except that the kinds of dispersion medium was altered as shown in Table 1. Table 1 shows the results which were measured in the same manner as in Example 1.

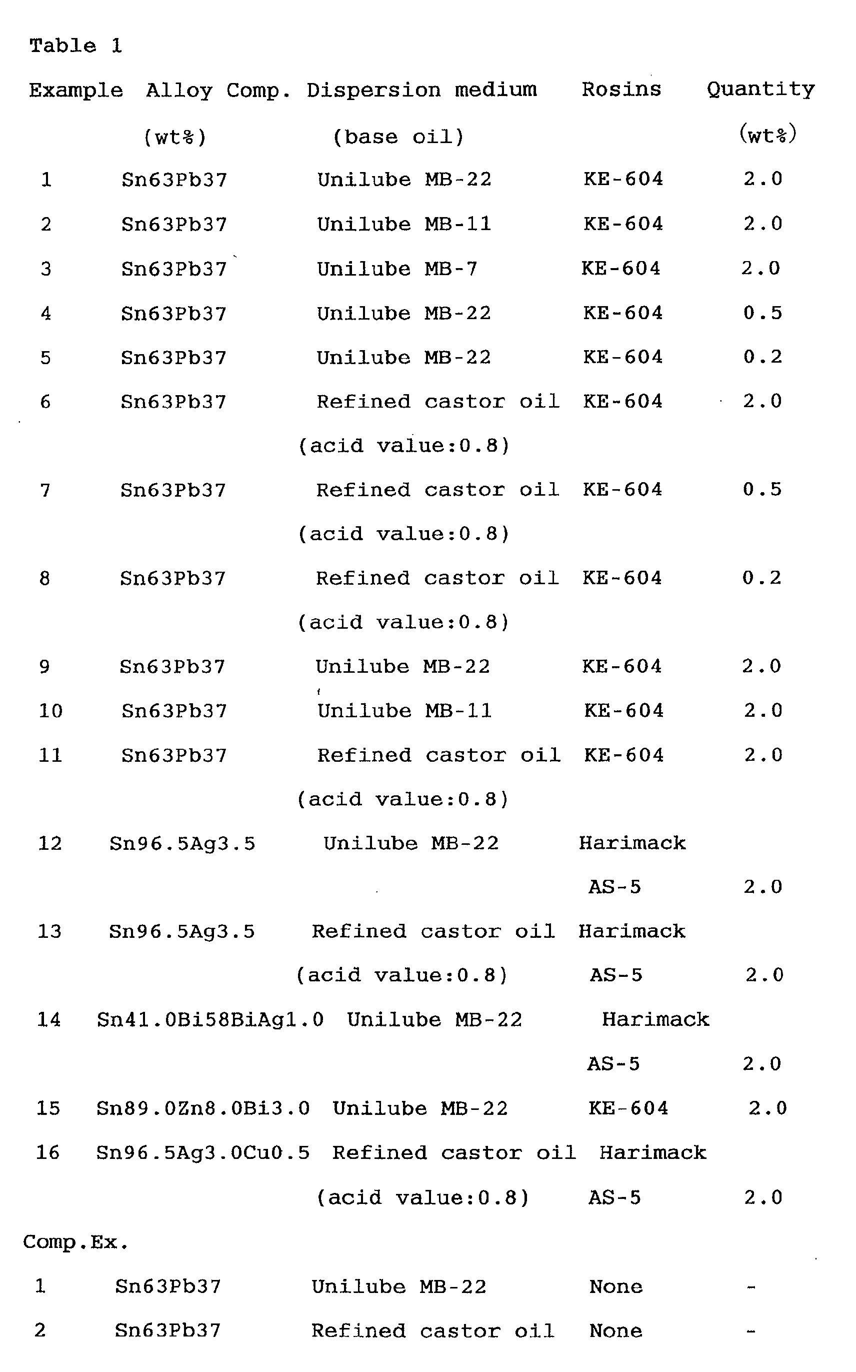

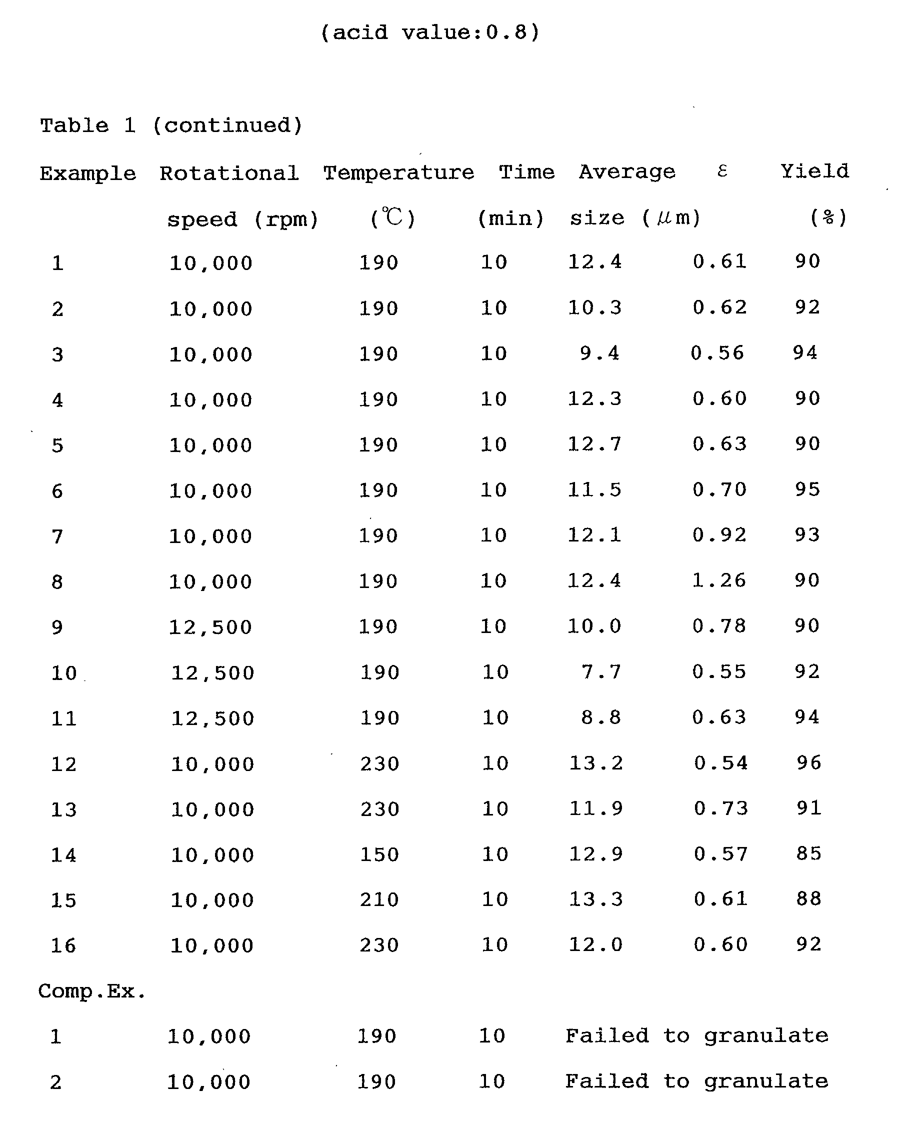

In Table 1, Unilube MB-22, Unilube MB-11 and Unilube MB-7 (tradename, NOF Corporation) represent polyalkylene glycol, and Harimac AS-5 (tradename, Harima Chemicals Inc.) represents dibasic acid (maleic acid)-modified rosin.

It will be seen from the results shown in Table 1 that Comparative Examples 1 and 2 where a particle coalescence-preventing agent (additive rosin) was not employed were found defective in that the solder was left remain in the form of lumps, thus failing to granulate the solder. Whereas in the case of all of the above Examples, it was possible to obtain fine particles having an average diameter of 13.3µm or less. In particular, it was found that when the rotational speed for the agitation was increased up to 12500rpm, fine metal particles having an average particle size of not more than 10 µm could be obtained. This result can be attributed to the fact that due to the presence of the particle coalescence-preventing agent, the molten fine solder particles in the particle dispersion medium were prevented from being coalesced with each other. By the way, even in these Comparative Examples, when the concentration of the molten fine solder particles in the particle dispersion medium is decreased, the solder can be granulated without necessitating the employment of the particle coalescence-preventing agent. In the cases of above Examples however, since a particle coalescence-preventing agent was employed, it was possible to effectively obtain fine solder particles even if the quantity of the particle dispersion medium employed was relatively small. As a result, the quantity of the particle dispersion medium required to be removed for isolating the fine solder particles can be minimized, thus making it possible not only to save the consumption of the components but also to improve the production efficiency.

### Example 17

Fine solder particles were manufactured in the same manner as in Example 1 except that the quantity of the rosin was altered as shown in Table 2. Table 2 shows the results which were measured in the same manner as in Example 1.

Further, the supernatant (the residual liquid to be left remained after the removal of precipitated matters from a cooled liquid subsequent to the processing thereof) obtained in the same manner as in Example 1 was subjected to a centrifugal separation (treated at a rotational speed of 10,000rpm (centrifugal acceleration: 7,600-16,900G) for 5 minutes by making use of CR22F, R12 rotor (Hitachi Kohki Co., Ltd.)) to thereby remove floating matters. When the quantity of the clarified liquid thus obtained was measured for determining the recovery ratio of the original dispersion medium (the ratio of the clarified liquid relative to the original quantity thereof), the result was 94%. The results are also shown in Table 2.

### Examples 18-26

A fresh dispersion medium corresponding in quantity to a deficient quantity of 6% ((Unilube MB-22)+2% KE-604) (2% of KE-604 out of this deficient quantity of 6%, the balance being Unilube MB-22, the same hereinafter) was supplemented to the recovered dispersion medium which was obtained in Example 17 (a clarified liquid which was recovered after the employment of a mixed liquid consisting of Unilube MB-22 and KE-604), thereby obtaining a mixed liquid. Subsequently, fine solder particles of Example 18 were manufactured in the same manner as in Example 17 except that the aforementioned mixed liquid was employed as a dispersion medium. Table 2 shows the results which were measured in the same manner as in Example 17.

Likewise, in each of Examples 19-26, a fresh dispersion medium ((Unilube MB-22)+2% KE-604) corresponding in quantity to a deficient quantity of dispersion medium that was resulted from the immediately preceding Example was supplemented to the recovered dispersion medium which was recovered from the immediately preceding Example at the recovery ratio as shown in Table 2, thereby obtaining a mixed liquid. Then, fine solder particles of each of these Examples were manufactured in the same manner as in Example 17 except that the aforementioned mixed liquid was employed as a dispersion medium. Table 2 shows the results which were measured in the same manner as in Example 17.

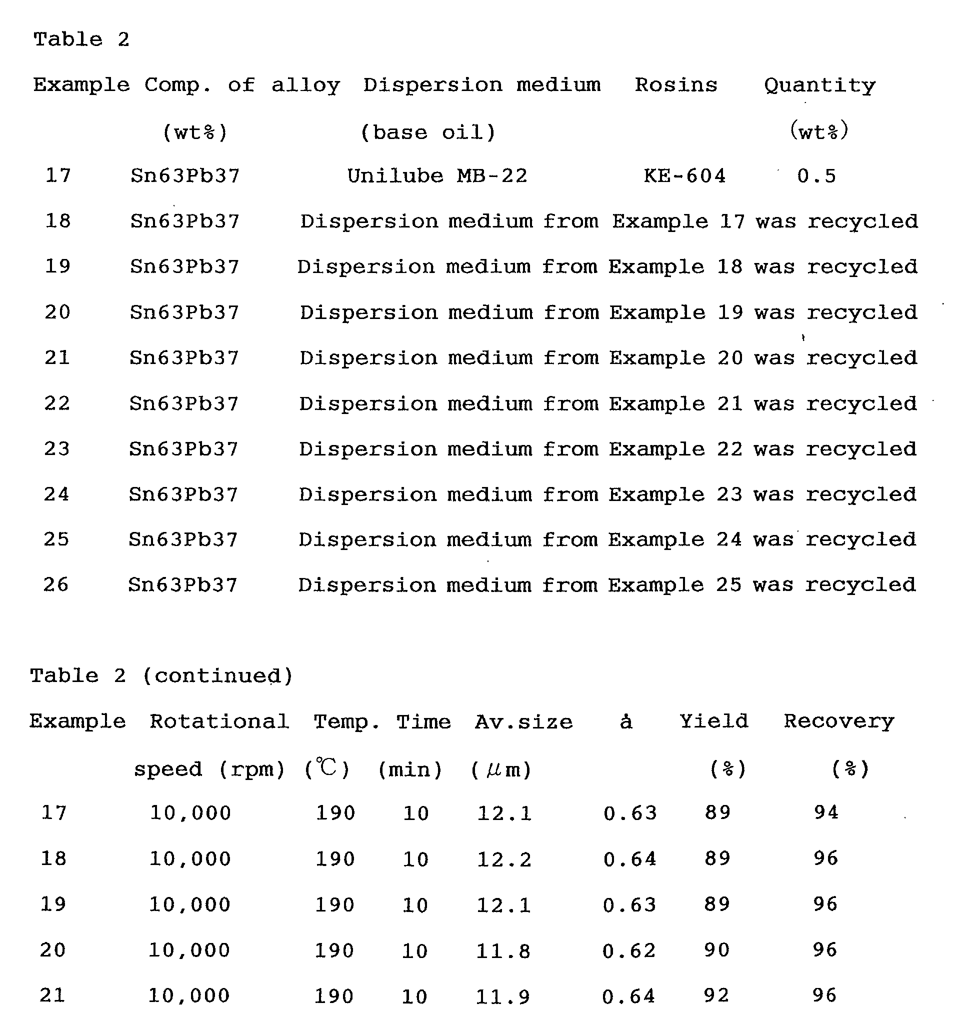

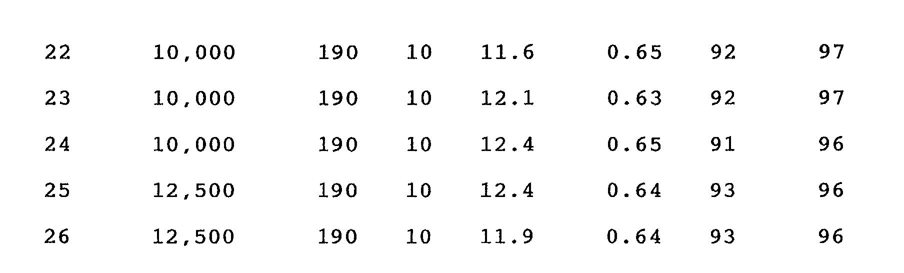

It will be understood from the results shown in Table 2 that even if a recovered dispersion medium is employed, almost the same results as obtained in the aforementioned Examples 1-16 where a fresh dispersion medium (particle dispersion medium) was employed can be obtained.

### Examples 27 to 30

Fine solder particles were manufactured in the same manner as in Example 1 except that the composition of alloy, the kinds of dispersion medium, the kinds of the additive rosin, the quantity of the rosin, the rotational speed for agitation, and the stirring temperature were altered as shown in Table 3 (wherein "Rosin" is replaced by "Coalescence-preventing agent"). Table 3 shows the results which were measured in the same manner as in Example 1.

In Table 3, the coalescence-preventing agents represent respectively an Sn salt of rosin derivatives such as Foral-AX (complete hydrogenated rosin), KE-604 (see Example 1), Harimack AS-5 (see Example 12), and Malkyd No.33 (maleic acid-modified rosin). These Sn salts were manufactured according to the following metathesis.

### (Method of manufacturing Sn salts of rosin derivatives by means of metathesis)

To an ethanol solution of a rosin derivative was added KOH to prepare an ethanol solution of a K (potassium) salt of rosin derivative, which was then allowed to react with an ethanol solution of SnCl₂ at normal temperature to precipitate an Sn salt of rosin derivative. Subsequently, this Sn salt was filtered by means of Buchner funnel and washed with pure water, followed by drying.

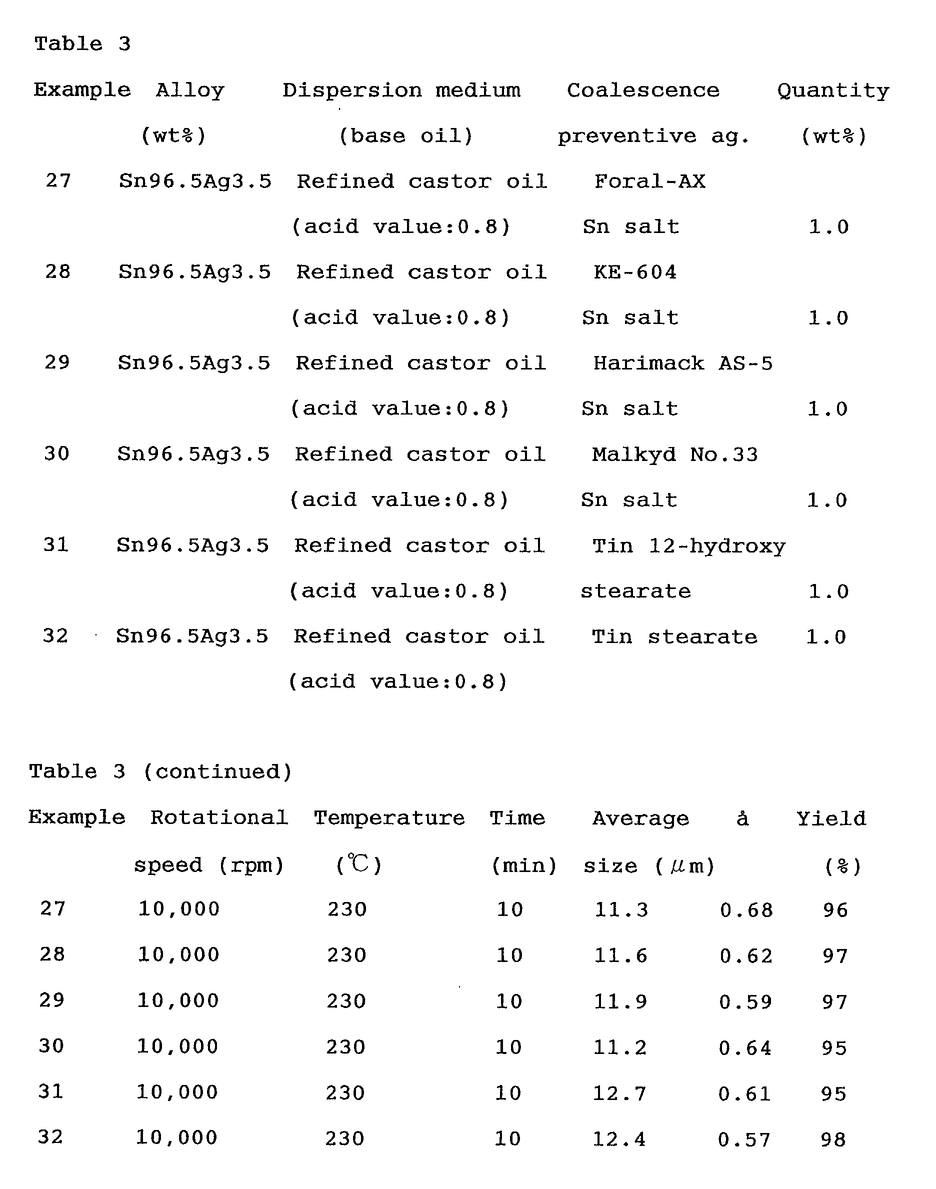

It will be seen from the results shown in Table 3 that in the case of all of the above Examples where a particle coalescence-preventing agent (an Sn salt of rosin derivatives having carboxyl group) was employed, it was possible to obtain fine particles having an average diameter of 11.9µm or less.

### Examples 31 and 32

Fine solder particles were manufactured in the same manner as in Example 1 except that the composition of alloy, the kinds of dispersion medium, the kinds of the additive rosin, the quantity of the rosin, the rotational speed for agitation, and the stirring temperature were altered as shown in Table 3 (wherein "Rosin" is replaced by "Coalescence-preventing agent"). Table 3 shows the results which were measured in the same manner as in Example 1.

In Table 3, the coalescence-preventing agents represent tin 12-hydroxy stearate and tin stearate, respectively, which are both fatty acid soap (although the former is a soap of a fatty acid derivative, it can be included in this definition). The former soap was manufactured according to the aforementioned metathesis, while the latter soap was procured from the market (Kishida Chemical Co., Ltd.).

It will be seen from the results shown in Table 3 that in the case of all of the above Examples where a particle coalescence-preventing agent (an Sn salt of hydroxycarboxylic acid or an Sn salt of stearic acid) was employed, it was possible to obtain fine particles having an average diameter of 12.7µm or less.

### Example 33

A solder paste having the following composition was prepared.

| | |
|---|---|
| Hydrogenated rosin (rosin-based resin) | 55.0g |
| Adipic acid (activating agent) | 2.0g |
| Hydrogenated castor oil (thixotropic agent) | 6.0g |
| Hexyl carbitol (solvent) | 37.0g |
| Above being components of a flux | (total=100g) |
| This flux | 11.0g |
| Solder particles (manufactured in Example 1) (Sn/Pb=63/37) | 89.0g |
| Above being components of a solder paste | (total=100g) |

Then, the aforementioned flux and solder particles were mixed together and agitated to obtain a solder paste. When the viscosity of this solder paste was measured by making use of Malcom viscometer, the viscosity thereof was found 230Pa·s (measured at a temperature of 25°C).

Then, this solder paste was subjected to the following tests, i.e. (1) Printability test (a test to examine if a thin spot or bleeding can be visually recognized on a printed surface produced by a screen printing where a metal mask having a thickness of 0.15mm was employed); (2) Viscosity test (a test based on JIS Z 3284 to examine the adhesive strength of the solder paste); (3) Sagging resistance test under a heated condition (a test based on JIS Z 3284 to examine any squeeze-out to be generated from a predetermined place of a coated film under a heated condition); (4) Insulation test (a test based on JIS Z 3284 to measure the resistance of a flux film separated from a solder); (5) Solderability test (a test to evaluate the solderability when a main heating is performed at a temperature of 240°C for 30 seconds after a pre-heating which is performed at a temperature of 150°C for 120 seconds or at a temperature of 200°C for 120 seconds in a reflow soldering apparatus, wherein the solderability is evaluated by a five-grade method in which a state where an unfused portion cannot be recognized at all in a solidified solder after the fusion thereof is defined as being grade 5, and a state where a lot of unfused portions can be recognized in a solidified solder is defined as being grade 1, grades 3 or more being considered as being practically useful). As a result, all of the solder pastes were determined as being useful in practical viewpoint.

By the way, when the solder pastes obtained in other examples were subjected to the aforementioned tests, almost the same results were obtained.

According to the present invention, it is possible to provide a method of manufacturing fine metal particles, which makes it possible to reduce the ratio of the quantity of the particle dispersion medium relative to the quantity of a low melting point metal, to effectively manufacture spherical fine metal particles in industrial viewpoint, to reduce the quantity of the components to be consumed in the manufacturing process to thereby make it possible to save the manufacturing cost, to further reduce the manufacturing cost by recovering and recycling the particle dispersion medium, and to apply it to a fine soldering portion of a wiring board. It is also possible according to the present invention to provide a substance containing such fine metal particles, and to provide a paste solder composition containing such fine metal particles.

Further, it is also possible, through the employment of this paste solder composition, to perform a metal mask printing of a fine pattern. As a result, it is now possible to perform a high density packaging such as the surface mounting of electronic device, thereby making it possible to respond to the current demands for the multifunctionization of the wiring board of electronic devices as well as to the current demands for the miniaturization, i.e. the reduction of the size and weight of electronic devices.

## Claims

1. A method of manufacturing fine metal particles, which comprises the steps of:
dispersing molten metal particles in a dispersion medium by way of a process wherein a low melting point metal is mixed with the dispersion medium to obtain a mixture which is subsequently heated to melt the low melting point metal, and a dispersing energy is applied to the dispersion medium to disperse the low melting point metal in the dispersion medium to obtain a molten metal particle-dispersed substance; and
forming solid particles by cooling the molten metal particle-dispersed substance to thereby solidify the molten metal particles;
wherein said step of dispersing molten metal particles in a dispersion medium and said step of forming solid particles are preceded by a step of mixing the dispersion medium with a particle coalescence-preventing agent which is capable of adsorbing onto and/or reacting with at least the molten metal particles and also capable of preventing the generation of coalescence at least among the molten metal particles.

2. The method of manufacturing fine metal particles according to claim 1, wherein said particle coalescence-preventing agent is rosin and/or a derivative thereof.

3. The method of manufacturing fine metal particles according to claim 1, wherein said particle coalescence-preventing agent is rosin soap.

4. The method of manufacturing fine metal particles according to claim 1, wherein said particle coalescence-preventing agent is a metal salt of organic acid having carboxyl group.

5. The method of manufacturing fine metal particles according to any one of claims 1 to 4, which further comprises a step of removing the solidified metal particles obtained in said step of forming solid particles from said dispersion medium, thereby leaving a residual liquid, which is then recycled as a particle dispersion medium.

6. The method of manufacturing fine metal particles according to any one of claims 1 to 5, wherein the low melting point metal is employed at a ratio of 0.1-100g per 100g of the dispersion medium, and the particle coalescence-preventing agent is employed at a ratio of 0.01-10g per 100g of the dispersion medium.

7. The method of manufacturing fine metal particles according to any one of claims 1 to 6, wherein the application of said dispersing energy to the dispersion medium is performed by making use of a high-speed agitator comprising a cup-shaped stator having slits in the sidewall thereof, and a rotator mounted inside the stator and having a rotary vane, wherein a fluid material is permitted to be introduced through said slits into said stator, in which the fluid material is subjected to a high shearing force through an interaction between said stator and said rotator by actuating said rotator to rotate at a high speed relative to said stator, the fluid material being subsequently discharged from the stator.

8. The method of manufacturing fine metal particles according to claim 7, wherein the number of revolution of the high-speed agitator is at least 5000 per minute, and the temperature of said heating is at least 10 higher than the melting point of the low melting point metal.

9. The method of manufacturing fine metal particles according to any one of claims 1 to 8, wherein the low melting point metal is employed at a ratio of 0.1-100g per 100g of the dispersion medium, the particle coalescence-preventing agent is employed at a ratio of 0.01-10g per 100g of the dispersion medium, and the application of said dispersing energy to the dispersion medium is performed by making use of a high-speed agitator comprising a cup-shaped stator having slits in the sidewall thereof, and a rotator mounted inside the stator and having a rotary vane, wherein a fluid material is permitted to be introduced through said slits into said stator, in which the fluid material is subjected to a high shearing force through an interaction between said stator and said rotator by actuating said rotator to rotate at a high speed relative to said stator, the fluid material being subsequently discharged from the stator.

10. The method of manufacturing fine metal particles according to any one of claims 1 to 9, wherein the low melting point metal is employed at a ratio of 0.1-100g per 100g of the dispersion medium, the particle coalescence-preventing agent is employed at a ratio of 0.01-10g per 100g of the dispersion medium, and the application of said dispersing energy to the dispersion medium is performed by making use of a high-speed agitator comprising a cup-shaped stator having slits in the sidewall thereof, and a rotator mounted inside the stator and having a rotary vane, wherein a fluid material is permitted to be introduced through said slits into said stator, in which the fluid material is subjected to a high shearing force through an interaction between said stator and said rotator by actuating said rotator to rotate at a high speed relative to said stator, the fluid material being subsequently discharged from the stator, and the number of revolution of the high-speed agitator is at least 5000 per minute, and the temperature of said heating is at least 10 higher than the melting point of the low melting point metal.

11. A fine metal particles-containing substance containing fine metal particles obtained by a method according to any one of claims 1 to 10.

12. A paste solder composition containing fine metal particles to be employed for soldering, said fine metal particles being fine metal particles-containing substance to be obtained by a method according to any one of claims 1 to 10.
